# EUROPEAN PATENT SPECIFICATION

(11) **EP 2 039 929 B1**
(45) Date of publication and mention of the grant of the patent: **11.03.2015**
(21) Application number: 07721556.4
(22) Date of filing: 25.06.2007
(51) Int. Cl.: F03D 11/04, F03D 3/06

(54) **A METHOD FOR INSTALLING BLADES AND WIND WHEEL OF VERTICAL AXIS WIND POWER GENERATOR**
VERFAHREN ZUR INSTALLATION VON SCHAUFELN UND WINDRAD FÜR EINEN VERTIKALACHSEN-WINDENERGIEERZEUGER
PROCÉDÉ D'INSTALLATION DES PALES ET DE LA ROUE D'UN AÉROGÉNÉRATEUR À AXE VERTICAL

(30) Priority: 28.06.2006 CN 200610028267
(43) Date of publication of application: 25.03.2009
(73) Proprietor: Yan, Qiang, Pu Tuo District, Shanghai 200333 (CN)
(72) Inventor: Yan, Qiang, Pu Tuo District, Shanghai 200333 (CN)
(74) Representative: Lang, Christian
(86) International application number: PCT/CN2007/001983
(87) International publication number: WO 2008/003230

(56) References cited:
- EP-A2- 0 276 764
- WO-A1-96/01368
- WO-A1-2005/038251
- CA-A1- 2 543 399
- CN-A- 1 484 734
- CN-A- 1 873 220
- DE-C1- 4 402 378
- DE-U1- 8 615 467
- JP-A- 2005 171 852
- JP-A- 2005 307 850
- US-A1- 2006 120 872

## Description

### FIELD OF THE INVENTION

This invention relates to a vertical axis wind turbine and in particular, to a method for installing blades and a wind rotor of vertical axis wind turbine.

### TECHNICAL BACKGROUND

In order to make better use of wind energy, it has been for a long time that people designed various wind generating devices of different structure forms. Depending on the different directions of rotating axis, wind turbines are divided into the horizontal axis wind turbine (HAWT) and the vertical axis wind turbine (VAWT).

The vertical axis rotor of vertical axis wind turbine can be divided into lift-type rotor and drag-type rotor. The book entitled Wind Energy and Its Utilization published by the Energy Publishing House in February 1984 (p81-85) explains in details the characteristics of lift-type and drag-type rotors. Though both lift-type and drag-type rotors are vertical axis rotors, the principles of wind driving rotor to rotate are completely different and the effects are also totally different.

"Lift type" means that when wind blows the surface of a blade, the wind speeds for blade's outer and inner surfaces are different due to blade's shape and angle of installation. A wind speed difference is generated for blade's outer and inner surfaces. It might be known according to fluid mechanics that when the fluid speeds for inner and outer surfaces are different, a pressure difference is generated between two surfaces, i.e. lift force. When the blades are installed with a specific angle of installation (angle of attack) at different positions, this pressure difference (lift force overcomes drag force) will produce a driving moment around rotor's centre of gyration, which drives rotor to rotate. However, when wind rotor rotates, a specific resistance is produced by blades due to their wing shape, the higher the rotating speed of wind rotor is, the bigger the resistance is, until a balance is achieved between lift force and resistance. Therefore, the efficiency of lift-type wind rotor depends on the design parameters of wind rotor (parameters such as wing shape and angle of installation for blades).

However, drag-type vertical axis rotor has an essential difference from lift-type rotor. Blade shape for drag-type rotor is different from that for lift-type rotor. Simply speaking, the blade of drag-type rotor can be a door plate. The drag coefficients on both sides of the blade are different; the side with a bigger drag coefficient obtains a bigger wind pressure. Wind pressure difference makes rotor rotates. But because drag-type rotor uses the component of wind's force vertical to wing surface, "positive work" is done in rotor's right half circumference, while "negative work" is done in rotor's left half circumference. Because the wind speeds at left and right sides are the same and the difference only lies in the drag coefficients on both sides of the blade, the work done in left and right half circumferences is the function of blade's drag coefficient x cube of blade's relative wind speed. If wind speed is V and linear speed of rotor rotation is u: in right half circumference, because wind "drives" blade to move, blade's relative linear speed is lowered (V-u); in left half circumference, because the blade moves upwind, relative linear speed (V + u) is higher than that for right half circumference. Therefore, when wind blows from the left, the left gate flap has the biggest moment and the blades obtain the biggest moment; the moment at other positions are smaller. Once blades are selected, the drag coefficients on both sides of blades are fixed. Therefore, the difference between the works done in rotor's left and right half circumferences decreases with the increase of rotor's rotational speed, i.e. the efficiency of drag-type rotor decreases with the increase of rotor's rotational speed, which is opposite to lift-type rotor.

The wind rotor of lift-type vertical axis wind turbine adopts wing-shaped straight blades. The axis line of the blade is parallel to that of center of gyration. Normally, the blade is fixed on a blade support rotating around center of gyration. When enough strong wind blows these straight blades that are wing-shaped and form a specific angle with the tangent of rotating axis, lift force and resistance are produced on these blades. When the lift force is higher than the resistance, a moment of rotation around vertical axis is produced on these blades to rotate the whole wind rotor. However, the size and direction of lift force and resistance changes continuously due to the constant changes in the rotating angle of blades with wind direction during rotation. That is to say, the size and direction of moment produced at different positions of blades changes constantly. At some positions, a positive moment is produced. At some positions, a negative moment is produced. Thus it decreases the wind energy utilization ratio of vertical axis wind turbine.

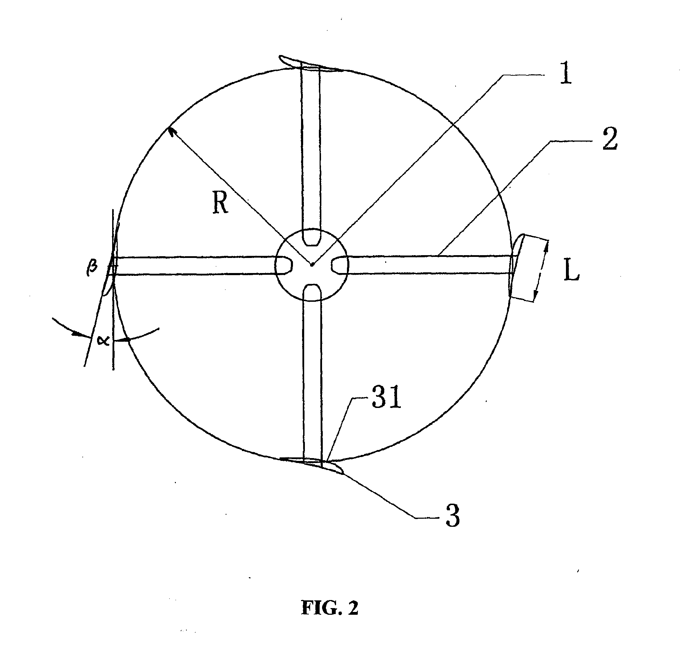

Figure 2 is the schematic diagram of blade structure of this invention. According to aerodynamics, the rotating angle between chord line of the blade and the tangent of a position in the circumference is called blade rotating angle α. The azimuth angle of a wing-shaped blade at any relative position in the circumference is set as β. The connecting line between blade's front and rear edges is called chord line L, and the radius of wind rotor's rotating around vertical axis is called rotation radius of the wind rotor R. The ratio of rotation radius of the wind rotor to chord line of the blade is defined as radius/chord ratio, which is a very important parameter in the installation of the blades and a wind rotor of vertical axis wind turbine.

In the research methods of existing lift-type vertical axis wind turbines, there is no specific definition to the setting of radius/chord ratio for the installation method, particularly the installation course of blades and a wind rotor. Normally, in existing methods, the size of the blade is set as very narrow on the basis of the method for installing horizontal axis wind turbine, i.e. the radius/chord ratio is set as very large, which results in a starting difficulty through the wind rotor but it can get a high rotating speed during race rotation, that is to say, the torque offered by the wind rotor is very small; or the radius/chord ratio is set as very small, which reaches an easy rotor starting but results in a large resistance produced on the blade during the rotation of the wind rotor at a very high wind speed, thus the wind rotor is unable to get a much higher rotating speed.

The power of the motor equals torque multiplied by angular speed. Therefore, the above methods can neither make the motor get an enough big torque nor get an enough high speed, which affects the wind energy utilization ratio of vertical axis wind turbine and thus makes vertical axis wind turbine lack of commercial value.

This invention is a further improvement of the method for installing blades and a wind rotor on the basis of CN 200610025202.7 (A Method for Installing Blades of Vertical Axis Wind Turbine), which further strengthens the commercial development value.

Besides, in current blade installation method, usually blades are directly connected to the support limb by welding or using bolts and nuts. But, in an actual wind field, the force impact on the wind rotor consisting of blades is very complicated and in particular, a very strong centrifugal force is produced during high-speed rotation. Thus, the safety of blades connected to the support limb by using the above method cannot be ensured and may easily result in danger due to blade fracture or falling from the support limb. Therefore, in order to enhance safety for wind rotor during rotation, the installation method applied to connect blades and support limb are improved.

In addition, existing vertical axes are all coaxially connected with the motor. But the wind rotor encounters a very large force impact in an actual wind field, which inevitably produces a horizontal vibration on the vertical axis, and thus causes an effect on the motor.

CA 2 543 399 A1 discloses a vertical axis windmill. At outer ends of each support arm a vertical blade with two convex surfaces is fixed with the inner surface opposing a vertical main shaft of the windmill. A chord length varies depending on orbital radius and the number of the blades.

DE 44 02 378 C1 discloses a vertical windmill having asymmetrically formed rotor blades. The rotor blades are fixed to a support structure. Positive angles of attack are used for the rotor blades.

### INVENTION CONTENTS

This invention settles such technical issues as overcoming the inadequate understanding of the parameter of radius/chord ratio in existing technology, proposing a method for installing blades and a wind rotor of vertical axis wind turbine and making further improvement in the connecting structure of the blade and the support limb.

The specific technical scheme of this invention is described below:

A method for installing blades and a wind rotor of vertical axis wind turbine is disclosed, wherein support limbs are connected with vertical axis, a wind rotor consists of a plurality of blades installed at blade support limbs, an aerofoil of the blade is a dissymmetrical aerofoil with camber, the blade is mounted in the manner that its convex surface faces the vertical axis, characterized in that a ratio of rotation radius of the wind rotor to chord length of the blade is in the range of 1.8∼4 and the range of blade rotating angle (α) is 2-8 degrees.

A range of the ratio of rotation radius of the wind rotor to chord length of the blade can be 1.8∼3.

A range of the ratio of rotation radius of the wind rotor to chord length of the blade can be 2∼3.

The number of blades composing a wind rotor can be 3-6 pieces.

The optimal number of blades composing a wind rotor can be 5 pieces.

There is a metal ring with proper width and thickness at one end of the support limb connected to blades, and blades are fixed inside this metal ring.

In order to overcome the negative effect on the motor due to a horizontal vibration resulting from existing coaxial connection of vertical axis and motor, the motor in this invention adopts a hollow rotating axis so that the rotating axis of wind rotor can pass through the motor's hollow axis and be connected with the base, thus loading weight of the wind rotor to the rotating axis of the motor is avoided. To adopt the direct connection of vertical axis to the base rather than the coaxial connection to the motor can avoid the negative effect of vibration on the motor.

In addition the invention includes a vertical axis wind turbine, comprising: a plurality of support limbs connected with a vertical axis, a wind rotor comprising a plurality of blades connected to the blade support limbs, said wind rotor having a rotation radius and said blades having a chord length; wherein an airfoil of said blade is a dissymmetrical chamber airfoil, a convex surface of the blade faces the vertical axis, a ratio of the rotation radius of the wind rotor to the chord length of the blade is between 1.8 and 4, and the blades have a blade rotating angle (a) between about 2 and about 8 degrees.

This invention will be described below on the basis of attached drawings and method of implementation.

### BRIEF DESCRIPTION OF THE DRAWINGS

Figure 1 is the schematic diagram of installing blades and wind rotor in this invention.
Figure 2 is the schematic diagram of blade structure in this invention.
Figure 3 is the schematic diagram of the implementation example 1 of this invention.
Figure 4 is the schematic diagram of the implementation example 2 of this invention.
Figure 5 is the schematic diagram of the implementation example 3 of this invention.
Figure 6 is the schematic diagram of the implementation example 5 of this invention.
Figure 7 is the structural diagram of connecting blades and support limbs through blade ferrule.

### METHOD OF IMPLEMENTATION

The following implementation examples give a further detailed description of this invention, but are not a limitation of this invention.

Through a lot of computer simulative calculation (CFD) and contrast wind tunnel tests, we found that vertical axis wind turbine can have commercial development value due to getting a very high wind energy to mechanical energy conversion efficiency for the wind rotor under conditions that the camber airfoil is mounted in a manner that its convex surface faces the vertical axis, the adopted angle of the installation of the blade is 2 - 8 degrees, there are identical blades, number of blades and angle of the installation of each blade, and the ratio of rotation radius of the wind rotor to chord length of the blade (i.e. radius/chord ratio) is in the range of 1.8∼4.

### Implementation Example 1: Rotating speed and power by computer simulative calculation under different radius/chord ratios.

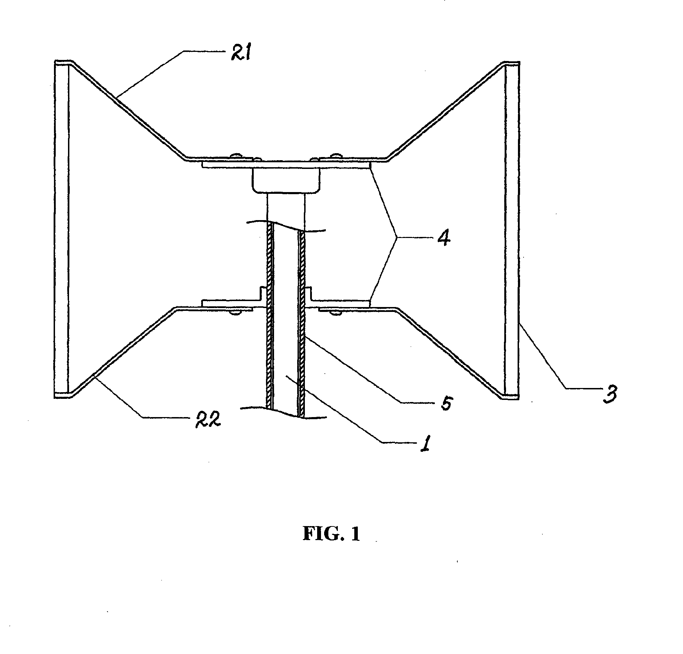

Figure 1 and 2 are respectively the schematic diagram of installing blades and a wind rotor in this invention and the schematic diagram of blade structure. The vertical axis wind turbine of this invention includes a vertical axis 1, support limbs 21 and 22 connected to vertical axis 1, and a wind rotor consisting of a plurality of blades 3 mounted to support limb 2, wherein the blades 3 are connected to axis sleeve 5 through support limbs 21 and 22 and flange 4. An aerofoil of the blade 3 is dissymmetrical aerofoil with a camber. The blade 3 is mounted in the manner that its convex surface 31 faces vertical axis 1.

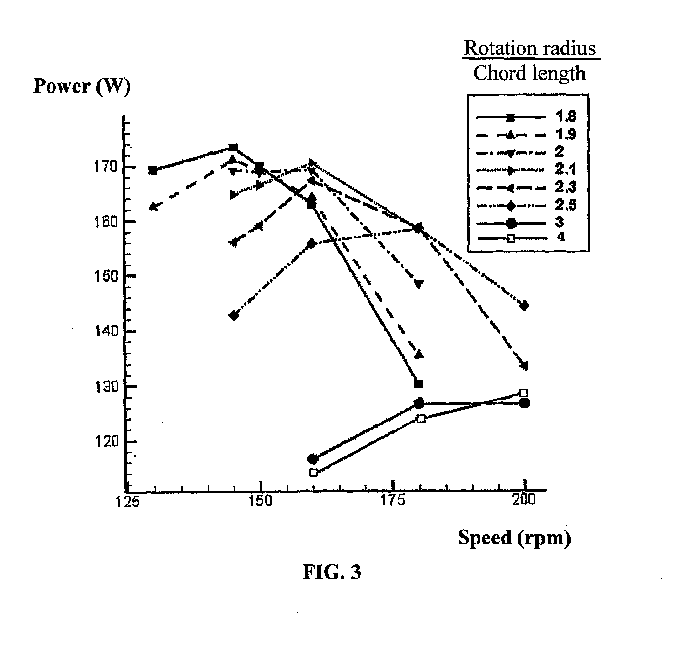

Figure 3 is the curve diagram of rotating speeds and output power of the wind rotor by computer simulative calculation (CFD) under different radius/chord ratios in Implementation Example 1. It is set as the prerequisite that radius of the wind rotor is 0.68m, the cumber-airfoil blade Goe63 is mounted in the manner that its convex surface faces vertical axis, blade rotating angle is 0∼10 degrees, the number of blades is 5 pieces, and wind speed is 10m/s. Then the rotating speeds and output power of the wind rotor can be got thorough computer simulative calculation under different radius/chord ratios.

From Figure 3 we can get that, when the radius/chord ratio of a wind rotor and blades of vertical axis wind turbine is 1.8∼4, a large output power can be achieved. When such radius/chord ratio is 2-3, a large output power for the wind rotor can be got within a wide range of rotating speed. When such radius/chord ratio is less than 2, the available range of rotating speed is narrow although a large output power can be got.

For a specific airfoil, to fix the angle of installation for the blade means fixing the resultant force of torque force and resistance for the blade, i.e. the resultant force equals the difference between torque force and resistance, which makes the wind rotor to get a moment of torque.

Under the condition of a low rotating speed and a long chord of the blade, i.e. a small radius/chord ratio, the absolute value of the torque force increases faster than that of the resistance because the torque force for the blade is larger than the resistance. For example, under the condition of a torque coefficient of 0.3 and a resistance coefficient of 0.1, when the chord length of the blade increase by one time, the absolute value of the torque force increases greater than that of the resistance, which results in the increase of the resultant force as well as the moment of torque of the wind rotor.

Under the condition of a high rotating speed and a long chord of the blade, i.e. a small radius/chord ratio, the vortex produced by the blade with a longer chord is larger than that produced by the blade with a shorter chord. Therefore, the absolute value of the resistance increases faster than that of the torque force, then the resultant force imposed on the blades decreases and the moment of torque of the wind rotor decreases accordingly, which finally gets the wind rotor into race rotation (no load) and the rotating speed to decrease.

Under the condition of a short chord of the blade, i.e. a large radius/chord ratio, when rotating at a low speed, although the resistance produced by a blade is smaller than that produced by the blade with a longer chord, the torque force is much smaller than that produced by the blade with a longer chord, as a result, the resultant force decreases, and the wind rotor gets a much smaller moment of torque; when rotating at a high speed, the vortex produced by the blade with a short chord is much smaller than that produced by the blade with a longer chord, as a result, the resultant force as well as the resistance is small, which makes the wind rotor get a high rotating speed during no load.

### Implementation Example 2: Rotating speed and power by computer simulative calculation under different blade rotating angles.

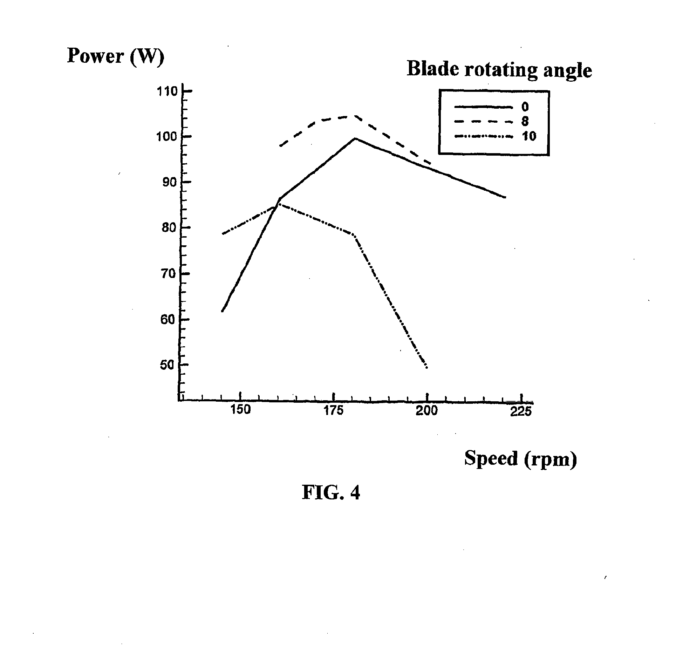

Figure 4 is the output power by computer simulative calculation under different blade rotating angles. It is set as the prerequisite that radius of the wind rotor is 0.68 m, the cumber-airfoil blade Goe63 is mounted in the manner that its convex surface faces vertical axis, the number of blades is 5 pieces, and wind speed is 10m/s. Then the rotating speeds and output power of the wind rotor can be got thorough computer simulative calculation under different blade rotating angles.

Figure 4 is the schematic diagram of the output of the wind rotor by computer simulative calculation under different blade rotating angles. When the blade rotating angle is 0∼10 degrees, the wind rotor can get a large power. The invention proposes that the blade rotating angle is 2∼8 degrees. A smaller blade rotating angle will affect its starting.

When the wind rotor is static, the blade is resistance-free. A blade can get a large moment of torque to easily start the wind rotor with a large blade rotating angle, while a blade can get a small moment of torque and have difficulty in starting the wind rotor with a small blade rotating angle.

When the wind rotor rotates, as the rotating speed increases, on the one hand, adjusting the blade rotating angle as necessary can make that the torque force at the blade increases faster than the resistance, the resultant force increases, and thus the moment of torque got on the wind rotor increases. On the other hand, to adjust the blade rotating angle can also make that the resistance for the blade increases faster than the torque force, and thus moment of torque got on the wind rotor decreases.

### Implementation Example 3: Output power of the wind rotor by computer simulative calculation with different number of blades.

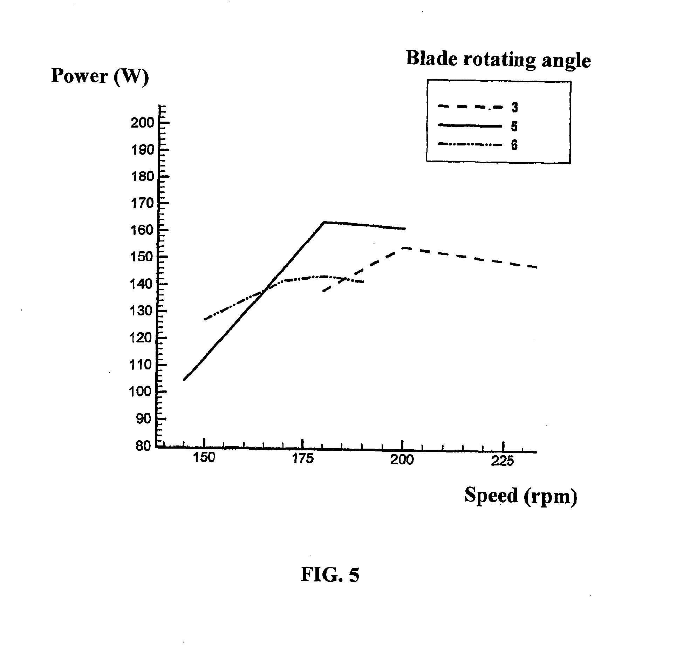

Figure 5 is the schematic diagram of the output of the wind rotor by computer simulative calculation with different numbers of blades. It is set as the prerequisite that radius of the wind rotor is 0.68 m, the cumber-airfoil blade Goe63 is mounted in the manner that its convex surface faces vertical axis, and the wind speed is 10 m/s. Then a curve for the rotating speeds and output power of the wind rotor under different blade rotating angles can be got.

As shown in Figure 5, by comparing the wind rotor respectively consisting of 3, 5, 6 blades, we can get that when the chord length of the blade keeps unchanged, as the number of blades increases, the distance between adjacent blades is shortened, then the vortex produced at the rear edge of the previous blade increases the aerodynamic resistance on the next blade, thus the moment of torque of the wind rotor decreases. However, if the number of blades is too small, the moment of torque got for the wind rotor will decrease accordingly. It is tested that a wind rotor consisting of 5 blades can produce a maximum output power.

### Implementation Example 4: Effect of different numbers of blades on starting the wind rotor.

The following Table 1, 2 and 3 is the data of the force impact on the wind rotor in a static state measured under the condition that a Goe63 airfoil is adopted, the blade is installed in the manner that its convex surface faces the vertical axis, the blade rotating angle is 0∼10 degrees, and the wind speed is 10 m/s.

Table 1 is the data of the force impact on the wind rotor consisting of 6 blades in a static state. Table 2 is the data of the force impact on the wind rotor consisting of 4 blades in a static state. Table 3 is the data of the force impact on the wind rotor consisting of 3 blades in a static state. The larger the moment of torque is, the more easily the wind rotor will start. However, in the following tables, the wind rotor cannot be easily started in case of a very small moment of torque for the blades. For example, the azimuth angle with a resulting torque in Nm of 4 in Table 1, the azimuth angle with a resulting torque in Nm of 3.5 in Table 2 and the azimuth angle with the resulting torque in Nm of 0.8 in table 3.

**Table 1**

| Azimuth angle | 0 | 10 | 20 | 30 | 40 | 50 |
|---|---|---|---|---|---|---|
| Torque (Nm) | -0.5 | 0 | 4.5 | 8.5 | 3.5 | 2.5 |
| Azimuth angle | 60 | 70 | 80 | 90 | 100 | 110 |
| Torque (Nm) | 4 | 5 | 6 | 7.5 | 5 | 5 |
| Azimuth angle | 120 | 130 | 140 | 150 | 160 | 170 |
| Torque (Nm) | 4.5 | 7 | 5 | 5 | 5 | 3.5 |
| Azimuth angle | 180 | 190 | 200 | 210 | 220 | 230 |
| Torque (Nm) | 2.5 | 2.5 | 0 | 0.5 | 0.5 | 0 |
| Azimuth angle | 240 | 250 | 260 | 270 | 280 | 290 |
| Torque (Nm) | 0 | 0 | -0.25 | -0.3 | -2.2 | -2.8 |
| Azimuth angle | 300 | 310 | 320 | 330 | 340 | 350 |
| Torque (Nm) | -3.2 | -3.8 | -4 | -4.6 | -4.5 | -4.2 |
| Resulting Torque (Nm) | 7.3 | 10.7 | 11.25 | 16.6 | 7.3 | 4 |

**Table 2**

| Azimuth angle | 0 | 10 | 20 | 30 | 40 | 50 | 60 | 70 | 80 |
|---|---|---|---|---|---|---|---|---|---|
| Torque (Nm) | -0.5 | 0 | 4.5 | 8.5 | 3.5 | 2.5 | 4 | 5 | 6 |
| Azimuth angle | 90 | 100 | 110 | 120 | 130 | 140 | 150 | 160 | 170 |
| Torque (Nm) | 7.5 | 5 | 5 | 4.5 | 7 | 5 | 5 | 5 | 3.5 |
| Azimuth angle | 180 | 190 | 200 | 210 | 220 | 230 | 240 | 250 | 260 |
| Torque (Nm) | 2.5 | 2.5 | 0 | 0.5 | 0.5 | 0 | 0 | 0 | -0.25 |
| Azimuth angle | 270 | 280 | 290 | 300 | 310 | 320 | 330 | 340 | 350 |
| Torque (Nm) | -0.3 | -2.2 | -2.8 | -3.2 | -3.8 | -4 | -4.6 | -4.5 | -4.2 |
| Resulting Torque (Nm) | 9.2 | 5.3 | 6.7 | 10.3 | 7.2 | 3.5 | 4.4 | 5.5 | 5.05 |

**Table 3**

| Azimuth angle | 0 | 10 | 20 | 30 | 40 | 50 | 60 | 70 | 80 | 90 | 100 | 110 |
|---|---|---|---|---|---|---|---|---|---|---|---|---|
| Torque (Nm) | -0.5 | 0 | 4.5 | 8.5 | 3.5 | 2.5 | 4 | 5 | 6 | 7.5 | 5 | 5 |
| Azimuth angle | 120 | 130 | 140 | 150 | 160 | 170 | 180 | 190 | 200 | 210 | 220 | 230 |
| Torque (Nm) | 4.5 | 7 | 5 | 5 | 5 | 3.5 | 2.5 | 2.5 | 0 | 0.5 | 0.5 | 0 |
| Azimuth angle | 240 | 250 | 260 | 270 | 280 | 290 | 300 | 310 | 320 | 330 | 340 | 350 |
| Torque (Nm) | 0 | 0 | -0.3 | -0.3 | -2.2 | -3 | -3.2 | -3.8 | -4 | -4.6 | -4.5 | -4.2 |
| Resulting Torque (Nm) | 4 | 7 | 9.25 | 13.2 | 6.3 | 3.2 | 3.3 | 3.7 | 2 | 3.4 | 1 | 0.8 |

Through a lot of wind tunnel tests, we find that different number of blades will affect the starting performance at a low wind speed of the wind rotor for vertical axis wind turbine. The smaller the number of blades is, the more dead positions (the wind rotor is difficult to start when the blade is at some positions) the wind rotor will encounter when starting, and thus the more difficultly the wind rotor will start. Therefore, increase of the number of blades will apparently improve the starting performance of vertical axis wind turbine. But as the number of blades increases, the moment of torque for the wind rotor at a high rotating speed will decrease, which also affect the wind energy utilization ratio of the wind rotor.

Taking the starting performance and wind energy utilization ratio into account, five blades can get optimal effect.

### Implementation Example 5: Contrast of wind tunnel tests under different number of blades.

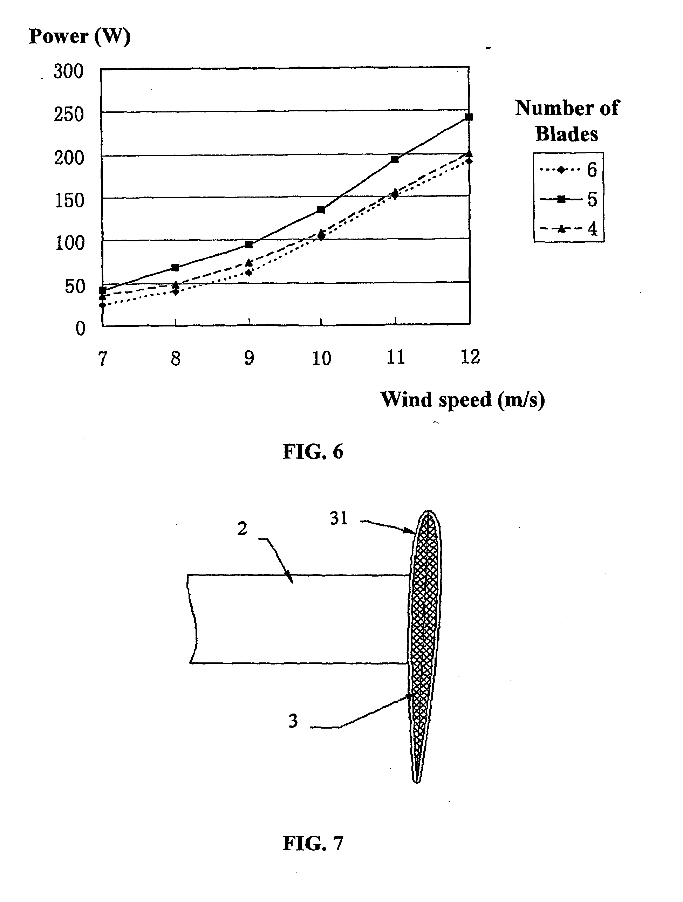

Figure 6 is the curve diagram of the output power got when the number of blades is respectively 4, 5 and 6 under the condition that the rotation radius of the wind rotor is 0.68 m, a Goe63 airfoil is adopted and installed in the manner that its convex surface faces the vertical axis, the radius/chord ratio is 3 and the blade rotating angle is 0∼10 degrees.

Through further test for Figure 5 and from Figure 5 and 6 we can get that a wind rotor consisting of 5 blades can offer a high wind energy utilization ratio for the vertical axis wind turbine in this invention and in particular, lessen the dead positions for starting the wind rotor and make the wind rotor easy to start at a low wind speed.

**Implementation Example 6:** For the purpose of installing blades in this invention, the structure of connecting the blade and the support limb with blade ferrule adopts.

Figure 7 is the profile of the connection of the blade and the support limb, wherein there is a metal ring 31 with proper width and thickness in the end of the support limb connected to the blade; the blade is inside this metal ring. This metal ring is called blade ferrule, which have specific mechanical strength and plays a role of fixing the blades and enhancing the safety for the wind rotor during rotation by connecting with the support limb.

In spite of a detailed description of this invention and some implementation examples, it is evident that the skilled technicians in this field may make changes and amendments, but the inventor's idea and scope of design shall be followed.

## Claims

1. A method for installing blades and a wind rotor of a vertical axis wind turbine, wherein support limbs (2) connect with vertical axis (1), a wind rotor consists of a plurality of blades (3) installed at blade support limbs (2), an aerofoil of the blade (3) is a dissymmetrical aerofoil with a camber, and the blade (3) is mounted in the manner that its convex surface (31) faces vertical axis (1), wherein a ratio of rotation radius of the wind rotor (R) to chord length of the blade (L) is in the range of 1.8∼4, **characterized in that** the range of blade rotating angle (α) is 2-8 degrees.

2. The method for installing blades and a wind rotor of a vertical axis wind turbine as stated in Claim 1, wherein the range of the ratio of rotation radius of the wind rotor (R) to chord length of the blade (L) is 1.8∼3.

3. The method for installing blades and a wind rotor of a vertical axis wind turbine as stated in Claim 1, wherein the range of the ratio of rotation radius of the wind rotor (R) to chord length of the blade (L) is 2∼3.

4. The method for installing blades and a wind rotor of a vertical axis wind turbine as stated in Claim 1, wherein the number of blades (3) composing a wind rotor is 3-6 pieces.

5. The method for installing blades and a wind rotor of a vertical axis wind turbine as stated in Claim 1, wherein the number of blades (3) composing a wind rotor is 5 pieces.

6. A vertical axis wind turbine, comprising:
a plurality of support limbs (2) connected with a vertical axis (1), a wind rotor comprising a plurality of blades (3) connected to the blade support limbs (2), said wind rotor having a rotation radius and said blades (3) having a chord length;
wherein
an airfoil of said blade is an dissymmetrical chamber airfoil,
a convex surface (31) of the blade (3) faces the vertical axis (1),
a ratio of the rotation radius of the wind rotor (R) to the chord length of the blade (L) is between about 1.8 and about 4, and **characterised by** the blades (3) having a blade rotating angle (α) between about 2 and about 8 degrees.

7. The turbine of claim 6, wherein the ratio of the rotation radius of the wind rotor (R) to the chord length of the blade (L) is between about 1.8 and about 3.

8. The turbine of claim 6, wherein the ratio of the rotation radius of the wind rotor (R) to the chord length of the blade (L) is between about 2 and about 3.

9. The turbine of claim 6, said turbine comprising a total of between 3 and 6 blades.

10. The turbine of claim 6, said turbine comprising a total of 5 blades.

11. The turbine of claim 6, further comprising a metal ring (31) disposed at one end of the support arm, said blade being fixed inside said metal ring.

## Patentansprüche

1. Verfahren für das Installieren von Rotorblättern und eines Windrotors einer Windturbine mit vertikaler Achse, wobei Unterstützungsglieder (2) mit einer vertikalen Achse (1) verbunden sind, wobei ein Windrotor eine Vielzahl von Rotorblättern (3) umfasst, die an Rotorblattunterstützungsgliedern (2) ausgebildet sind, wobei das aerodynamische Profil des Rotorblatts (3) ein disymmetrisches aerodynamisches Profil mit einer Kammer ist und wobei das Rotorblatt (3) in der Art montiert ist, dass dessen konvexe Fläche (31) der vertikalen Achse (1) zugewandt ist, wobei ein Verhältnis von Rotationsradius des Windrotors (R) zu Sehnenlänge des Rotorblatts (L) in dem Bereich von 1.8 bis 4 liegt,
**dadurch gekennzeichnet, dass**
die Spanne von Rotorblattrotationswinkeln (α) 2° bis 8° beträgt.

2. Verfahren für das Installieren von Rotorblättern und eines Windrotors einer Windturbine mit vertikaler Achse nach Anspruch 1, wobei die Spanne des Verhältnisses von Rotationsradius des Windrotors (R) zu Sehnenlänge des Rotorblatts (L) 1.8 bis 3 beträgt.

3. Verfahren für das Installieren von Rotorblättern und eines Windrotors einer Windturbine mit vertikaler Achse nach Anspruch 1, wobei die Spanne des Verhältnisses von Rotationsradius des Windrotors (R) zu Sehnenlänge des Rotorblatts (L) 2 bis 3 beträgt.

4. Verfahren für das Installieren von Rotorblättern und eines Windrotors einer Windturbine mit vertikaler Achse nach Anspruch 1, wobei die Anzahl an Rotorblättern (3), die einen Windrotor bilden, 3 bis 6 Stück umfasst.

5. Verfahren für das Installieren von Rotorblättern und eines Windrotors einer Windturbine mit vertikaler Achse nach Anspruch 1, wobei die Anzahl an Rotorblättern (3), die einen Windrotor bilden, 5 Stück umfasst.

6. Windturbine mit vertikaler Achse umfassend:
eine Vielzahl von Unterstützungsgliedern (2), die mit einer vertikalen Achse (1) verbunden sind,
einen Windrotor umfassend eine Vielzahl von Rotorblättern (3), die mit den Rotorblattunterstützungsgliedern (2) verbunden sind, wobei besagter Windrotor einen Rotationsradius und besagte Rotorblätter (3) eine Sehnenlänge aufweisen,
wobei ein aerodynamisches Profil des besagten Rotorblattes ein disymmetrisches Kammerprofil ist,
wobei eine konvexe Fläche (31) des Rotorblattes (3) der vertikalen Achse (1) zugewandt ist,
wobei ein Verhältnis von Rotationsradius des Windrotors (R) zu der Sehnenlänge des Rotorblatts (L) zwischen etwa 1,8 und etwa 4 liegt, und
**dadurch gekennzeichnet, dass**
die Rotorblätter (3) einen Rotorblattrotationswinkel (α) zwischen etwa 2° und etwa 8° aufweisen.

7. Turbine nach Anspruch 6, wobei das Verhältnis des Rotationsradius des Windrotors (R) zu der Sehnenlänge des Rotorblatts (L) zwischen etwa 1,8 und etwa 3 liegt.

8. Turbine nach Anspruch 6, wobei das Verhältnis des Rotationsradius des Windrotors (R) zu der Sehnenlänge des Rotorblatts (L) zwischen etwa 2 und etwa 3 liegt.

9. Turbine nach Anspruch 6, wobei besagte Turbine eine Gesamtanzahl von zwischen 3 und 6 Rotorblättern (3) umfasst.

10. Turbine nach Anspruch 6, wobei besagte Turbine eine Gesamtanzahl von 5 Rotorblättern (3) umfasst.

11. Turbine nach Anspruch 6, weiter umfassend einen Metallring (31), der an einem Ende des Unterstützungsarms ausgebildet ist, wobei besagtes Rotorblatt innerhalb besagten Metallrings montiert ist.

## Revendications

1. Procédé pour installer des pales et un rotor éolien d'une éolienne à axe vertical dans lequel des membres de support (2) sont reliés à l'axe vertical (1), un rotor éolien consiste en une pluralité de pales (3) installées sur des membres de support de pale (2), un plan aérodynamique de la pale (3) est un plan aérodynamique asymétrique avec une chambre et la pale (3) est montée de manière à ce que sa surface convexe (31) soit en face de l'axe vertical (1), dans lequel un rapport du rayon de rotation du rotor éolien (R) et de la longueur de corde de la pale (L) est de l'ordre de 1,8∼4, **caractérisé en ce que** la plage de l'angle de rotation de la pale (α) est de 2-8 degrés.

2. Procédé pour installer des pales et un rotor éolien d'une éolienne à axe vertical selon la revendication 1 dans lequel le rapport du rayon de rotation du rotor éolien (R) et de la longueur de corde de la pale (L) est de 1,8∼3.

3. Procédé pour installer des pales et un rotor éolien d'une éolienne à axe vertical selon la revendication 1 dans lequel le rapport du rayon de rotation du rotor éolien (R) et de la longueur de corde de la pale (L) est de 2-3.

4. Procédé pour installer des pales et un rotor éolien d'une éolienne à axe vertical selon la revendication 1 dans lequel le nombre de pales (3) qui composent un rotor éolien est de 3 à 6 pièces.

5. Procédé pour installer des pales et un rotor éolien d'une éolienne à axe vertical selon la revendication 1 dans lequel le nombre de pales (3) qui composent un rotor éolien est de 5 pièces.

6. Eolienne à axe vertical comprenant :
une pluralité de membres de support (2) reliés à un axe vertical (1),
un rotor éolien comprenant une pluralité de pales (3) reliées aux membres de support de pale (2), ledit rotor éolien ayant un rayon de rotation et lesdites pales (3) ayant une longueur de corde,
dans lequel un plan aérodynamique de ladite pale est un plan aérodynamique à chambre asymétrique,
une surface convexe (31) de la pale (3) est en face de l'axe vertical (1),
un rapport du rayon de rotation du rotor éolien (R) et de la longueur de corde de la pale (L) est entre 1,8 et environ 4 et
**caractérisé par le fait que** les pales (3) ont un angle de rotation de la pale (α) entre environ 2 et environ 8 degrés.

7. Eolienne selon la revendication 6 dans laquelle le rapport du rayon de rotation du rotor éolien (R) et de la longueur de corde de la pale (L) est entre environ 1,8 et environ 3.

8. Eolienne selon la revendication 6 dans laquelle le rapport du rayon de rotation du rotor éolien (R) et de la longueur de corde de la pale (L) est entre environ 2 et environ 3.

9. Eolienne selon la revendication 6 comprenant un total de pales entre 3 et 6.

10. Eolienne selon la revendication 6, ladite éolienne comprenant un total de 5 pales.

11. Eolienne selon la revendication 6 comprenant de plus un anneau de métal (31) disposé à une extrémité du bras de support, ladite pale étant fixée à l'intérieur dudit anneau de métal.
